# EUROPÄISCHE PATENTSCHRIFT

(11) **EP 2 896 539 B1**
(45) Veröffentlichungstag und Bekanntmachung des Hinweises auf die Patenterteilung: **09.10.2019**
(21) Anmeldenummer: 14198116.7
(22) Anmeldetag: 16.12.2014
(51) Int. Cl.: B60T 8/40

(54) **System zur Pedalkraftsimulation, insbesondere für ein Kupplungsbetätigungssystem**
System for simulating pedal force, in particular for a clutch actuation system
Système destiné à simuler la force de pédalage, en particulier pour un système d'actionnement d'embrayage

(30) Priorität: 17.12.2013 DE 102013226307
(43) Veröffentlichungstag der Anmeldung: 22.07.2015
(73) Patentinhaber: Schaeffler Technologies AG & Co. KG, 91074 Herzogenaurach (DE)
(72) Erfinder: Baßler, Manuel, 77855 Achern (DE); Honselmann, Sebastian, 77886 Lauf (DE)

(56) Entgegenhaltungen:
- EP-A2- 1 117 024
- WO-A1-2004/080772
- DE-A1-102011 016 239
- JP-A- H11 321 621

## Beschreibung

Die Erfindung betrifft ein System zur Pedalkraftsimulation, insbesondere für ein Kupplungsbetätigungssystem nach dem Oberbegriff des ersten Patentanspruchs.

Üblicherweise werden für die Kupplungsbetätigung Geberzylinder (CMC) eingesetzt. In der Druckschrift DE 10 2008 061 569 A1 wird ein Kupplungsbetätigungssystem offenbart, bei dem Konturelemente vorgesehen sind, und zumindest über einen Teilbereich des Betätigungsweges eine Kompensationsvorrichtung wirksam ist, bei er ein Energiespeicher mittels eines über den Betätigungsweg variierenden Profilteiles beaufschlagt wird, welches zwei Profilkennlinien aufweist.

Die Druckschrift EP 1 117 024 A2 offenbart eine Möglichkeit der Pedalkraftsimulation gemäß dem Oberbegriff des Patentanspruchs 1.

Nachteilig bei den bekannten Betätigungssystemen ist, dass zusätzlich zum Pedalkraftsimulator eine Übertotpunktfeder eingesetzt werden muss, um die erforderliche Kraftkennlinie im vorgesehenen Bauraum zu erzeugen.

Elemente zur Erzeugung einer Pedalkraftkennlinie mit und/oder ohne Hysterese werden vorwiegend bei sogenannten "by-Wire-Systemen" für Gas-, Brems- und Kupplungspedalen eingesetzt.

Bei Kupplungsbetätigungssystemen ist es somit ebenfalls üblich, eine Pedalkraftkennlinie zu erzeugen, um eine hydraulische oder mechanische Kupplungsbetätigung zu ersetzen und die Kraftkennlinie und mit oder ohne Hysterese einer konventionellen betätigten Kupplung nachzubilden, wenn die Stellung des Kupplungspedals mittels eines Sensors erfasst und an die Aktorik ist er weitergegeben wird (clutch by wire). Die Kraftlinie kann je nach eingesetztem Element linear progressiv oder degressiv erzeugt werden, sowie über den Pedalweg variieren (ansteigen und abfallen).

Es sind aus den Druckschriften DE 103 60 784 B4, DE 10 2006 054 020 A1 und US 2002/0117893 A1 Einrichtungen zur Kupplungsbetätigung bekannt mit welchen eine Hysterese erzeugt wird.

Aus der Druckschrift DE 10 2012 202 314 A1 ist für den Einsatz in Kraftfahrzeugen Lösung zur Kraft-Weg-Simulation für ein Pedal bekannt, die sich auf eine Simulation einer Kraft-Weg-Kennlinie bezieht. Gemäß dem dazu vorgeschlagenen Verfahren wird bei einer Betätigung des Pedals aufgrund einer Relativbewegung mindestens eines ersten, mit dem Pedal verbundenen und infolgedessen mit ihm gemeinsam bewegten Reibelements gegenüber mindestens einem zweiten, ortsfesten Reibelement eine Gleitreibung erzeugt. Diese Gleitreibung resultiert daraus, dass sich die vorgenannten Reibelemente bei ihrer gegeneinander ausgeführten Relativbewegung berührend aneinander entlang bewegen. Die dabei entstehende Gleitreibung wird von einer das Pedal bedienenden Person als eine der Pedalbetätigung entgegenwirkende Kraft empfunden. An einer Seitenwand des Pedalhebels ist dazu eine Druckstange befestigt, welche an ihrem dem Pedalhebel abgewandten Ende mit einem Hohlzylinder verbunden ist. An der Innenfläche des Hohlzylinders sind durch eine entsprechende Beschichtung ein oder mehrere Reibelemente ausgebildet. Aufgrund der über die Druckstange gegebenen Verbindung des Hohlzylinders mit dem Pedalhebel bewegen sich dieser und mit ihm das oder die an seiner Innenfläche angeordneten Reibelemente im Falle einer Betätigung des Pedals gemeinsam nach unten. Hierbei wird der Hohlzylinder über einen weiteren, an der nicht gezeigten Karosserie des Kraftfahrzeugs beziehungsweise an dem Lagerbock ortsfest angeordneten Zylinder geschoben, dessen Außenfläche als ortsfestes Reibelement wirkt oder an dessen Außenfläche ein oder mehrere entsprechende Reibelemente durch eine geeignete Beschichtung ausgebildet sind. Bei einer Betätigung des Pedals entsteht zwischen den sich zueinander relativ bewegenden Reibelementen eine Gleitreibung. Durch diese Gleitreibung wird einer das Pedal betätigenden Person der Eindruck einer der Pedalbetätigung entgegenwirkenden Kraft vermittelt.

Nachteil dieser Lösung ist, dass die Reibelemente radial sehr genau zueinander positioniert sein müssen.

Die Aufgabe der Erfindung ist es, ein System zur Pedalkraftsimulation für ein Kupplungsbetätigungssystem zu entwickeln, welches einen einfachen konstruktiven Aufbau aufweist und eine Pedalbetätigung entweder als konventionellen Handschalter oder als ein "by-Wire" System ermöglicht.

Diese Aufgabe wird erfindungsgemäß mit den kennzeichnenden Merkmalen des ersten Patentanspruchs gelöst. Vorteilhafte Ausgestaltungen ergeben sich aus den Unteransprüchen.

Das System zur Pedalkraftsimulation, welches für ein Kupplungsbetätigungssystem einsetzbar ist, weist ein Pedal auf, welches mit einer Pedalkraft betätigbar und mit einem, in einem Gehäuse entgegen einer Rückstellkraft einer Rückstellfeder axial verschiebbaren Kolben, wirkverbunden ist, wobei die Stellung des Pedals und /oder des Kolbens über einen Sensor erfassbar und an die die Kupplung betätigende Aktorik weiterleitbar ist und wobei der Kolben erfindungsgemäß mit wenigstens einem weiteren federnden Element wirkverbunden ist, welches mit ansteigenden und abfallenden Kraftverlauf eine Hysterese bereitstellt. Das erste federnde Element ist mit wenigstens einem zweiten Element kombiniert, welches zwischen dem Kolben und dem ersten Element angeordnet ist derart, dass das zweite Element bis zu einer ersten Position, bzw. ab/nach einem bestimmten Betätigungsweg des Kolbens das federnde erste Element elastisch verformt und die Rückstellkraft erzeugt wird und dass nach Überschreiten der ersten Position die Rückstellkraft in eine gleichgerichtete Kraft zur Pedalkraft umgewandelt wird.

Mit der erfindungsgemäßen Lösung ist es möglich, den aktuellen Schaltzustand, z.B. den aktuellen Kupplungszustandes gewohnheitsgemäß zu erkennen, wobei das System zur Pedalkraftsimulation in den vorhandenen Bauraum, der sonst für einen Geberzylinder bereitgestellt wird, eingesetzt werden kann.

Zusätzlich zur Rückstellfeder ist vorteilhafter Weise zwischen Kolben und Gehäuse wenigstens ein weiteres erstes federndes Element angeordnet, mit dem bei Betätigung des Pedals und somit des Kolbens eine auf den Kolben wirkende Rückstellkraft zusätzlich zur Rückstellkraft der Rückstellfeder erzeugbar ist.

Dabei ist das zweite Element so angeordnet, dass erst nach einem Betätigungsweg des Kolbens die zusätzliche Rückstellkraft durch das erste Federelement wirkt und das erste federnde Element insbesondere eine nicht lineare Kennlinie über einen Betätigungsweg des Kolbens aufweist. Dadurch ist es möglich, erst nach einem bestimmten Betätigungsweg eine zusätzliche Rückstellkraft aufzubringen, die entgegen der Pedalkraft wirkt und ab diesem Betätigungsweg eine flacher werdende, eine stagnierende oder eine steigende Kennlinie zu erzeugen.

Die Rückstellfeder und/oder das weitere erste federnde Element und/oder das zweite Element können dabei innerhalb oder außerhalb des Gehäuses angeordnet sein.

Bevorzugt werden jedoch die Rückstellfeder und das wenigstens eine erste Element innerhalb des Gehäuses angeordnet, wobei sich diese beispielsweise am Boden des Gehäuses abstützen. Das das erste Element kann die Rückstellfeder umringen oder von der Rückstellfeder umringt sein.

Wird ein zweites Element zwischen dem Kolben und dem ersten Element angeordnet, so verformt das zweite Element bei einer Vorhubbewegung des Kolbens bis zu einer ersten Pedalstellung/Kolbenposition das federnde erste Element elastisch, wobei eine der Vorhubbewegung und damit der Pedalkraft entgegen gesetzte Rückstellkraft erzeugt wird. Nach Überschreiten der ersten Position bzw. eines bestimmten Betätigungsweges wird die durch das erste Element erzeugte Rückstellkraft in eine gleichgerichtete Kraft zur Pedalkraft umgewandelt.

Das erste Element weist dazu federnde Bereiche in radialer und/oder axialer und/oder tangentialer Richtung auf, die durch das zweite Element bei einem Kolbenhub entsprechend elastisch deformiert werden.

In einer bevorzugten Ausgestaltung weisen das erste Element und das zweite Element ein sich über eine erste Länge erstreckendes radiales Übermaß zueinander auf, so dass über einen Betätigungsweg bei axialer Relativbewegung des zweiten Elements zum ersten Element eine Reibkraft zwischen dem ersten und dem zweiten Element zu verzeichnen ist.

Das erste Element kann dazu hülsenartig ausgebildet sein und mit einem ersten Ende am Boden des Gehäuse anliegen und an dem zweiten in Richtung zum Kolben weisenden Ende einen radial nach innen weisenden Absatz mit einem Durchbruch mit einem Innendurchmesser aufweisen und dass das zweite Element eine Durchmessererweiterung besitzen, deren Außendurchmesser größer ist als der Innendurchmesser des Durchbruchs, so dass das zweite Element bei Betätigung des Kolbens in das erste federnde Element einschiebbar ist und das erste federnde Element deformiert wird, wird das zweite Element soweit in das erste Element eingeschoben, wobei zwischen diesen eine Reibkraft wirkt, die entgegen der Pedalkraft gerichtet ist. Wird das zweite Element weiter verschoben, baut sich das Übermaß bis auf Null ab, so dass wieder nur die Rückstellfeder und das erste federnde Element eine Rückstellkraft erzeugen. Bei einer Rückbewegung des Pedals und somit einer Rückhubbewegung des Kolbens wirken zuerst die Rückstellfeder und das erste federnde Element mit ihrer Rückstellkraft. Wenn die Durchmessererweiterung des zweiten Elementes mit dem Innendurchmesser des Durchbruchs in Reibkontakt gelangt, wirkt die Reibkraft zwischen diesen der Rückstellkraft entgegen, bis der Reibkontakt wieder aufgehoben ist, wenn das zweite Element axial soweit zum ersten federnden Element verschoben wurde, dass kein radiales Übermaß mehr zwischen diesen vorhanden ist.

Das System gewährleistet die Erzeugung einer Pedalkraftkennlinie mit und ohne Hysterese, insbesondere im Bauraum eines Kupplungsgeberzylinders (CMC), wodurch eine hydraulische oder mechanische Kupplungsbetätigung ersetzt und die Kraftkennlinie und Hysterese einer konventionellen hydraulisch oder mechanisch betätigten Kupplung abgebildet werden kann. Die Betätigung der Kupplung erfolgt bei diesem System über eine Regelung, welche als Eingangssignal die Stellung des Kupplungspedals über einen Sensor erfasst und an die Aktuatorik weiter gibt. Die Kraftkennlinie kann je nach eingesetztem Element linear, progressiv oder degressiv erzeugt werden, sowie über den Pedalweg variieren (ansteigen und abfallen). Das System zur Erzeugung der Pedalkraftkennlinie mit und/oder ohne Hysterese kann vorwiegend bei sogenannten "by-Wire-Systemen" für Gas-, Brems- und Kupplungspedalen in Fahrzeugen eingesetzt werden.

Der Einsatz kann auch in anderen Systemen, bei denen eine Pedalkraftsimulation realisiert werden soll, erfolgen, z.B. in Fahrsimulatoren oder in beispielsweise Pedalen wie Kupplungspedalen, Bremspedalen oder Gaspedalen von Computerspielen.

Es wird erstmalig vorgeschlagen, zusätzlich zu einem federnden Element, welches eine Rückstellkraft zur Pedalkraft zur Verfügung stellt und im Inneren oder auf der Außenseite des Gehäuses angeordnet sein kann, wenigstens ein weiteres federndes erstes Element vorzusehen, welches in der Lage ist, in radialer, axialer oder tangentialer Richtung eine je nach Betätigung des Kolbens E5 variable zusätzliche Gegenkraft zu erzeugen.

Mittels eines weiteren zweiten Elements, welches mit dem ersten federnden Element kombinierbar ist, wird das erste Element bei einer Pedalbetätigung durch ein Übermaß zwischen einem Außendurchmesser des zweiten Elementes zu einem Innendurchmesser des ersten Elementes bis zu einer gewissen Pedalstellung verformt, um eine zusätzliche Kraft entgegen der Pedalkraftrichtung zu erzeugen. Durchschreitet der größte Durchmesser des zweiten Elements den Kontaktbereich des ersten federnden Elements, ist das Übermaß nicht mehr vorhanden und die in Richtung der Rückstellkraft wirkende Gegenkraft wird in eine gleichgerichtete Kraft zur Pedalkraft umgewandelt und unterstützt die Betätigung. Die Kraftkennlinie stagniert oder sinkt dadurch. Die Pedalkraft kann durch diese Eigenschaft einfach variabel entsprechend des jeweiligen Einsatzfalles eingestellt werden.

Die Erfindung wird nachfolgend anhand von Ausführungsbeispielen und zugehörigen Zeichnungen näher erläutert. Es zeigen:
- Figur 1: einen Längsschnitt eines nicht erfindungsgemäßen Pedalkraftsimulators mit einem zur Rückstellfeder zusätzlichen ersten Element im Längsschnitt,
- Figur 2: eine dreidimensionale Darstellung eines erfindungsgemäßen Pedalkraftsimulators mit zur Rückstellfeder zusätzlichen ersten Element und zweiten Element,
- Figur 3: den Längsschnitt gemäß Figur 2,
- Figur 4: die dreidimensionale Einzelteildarstellung des ersten Elementes gemäß Figur 2.

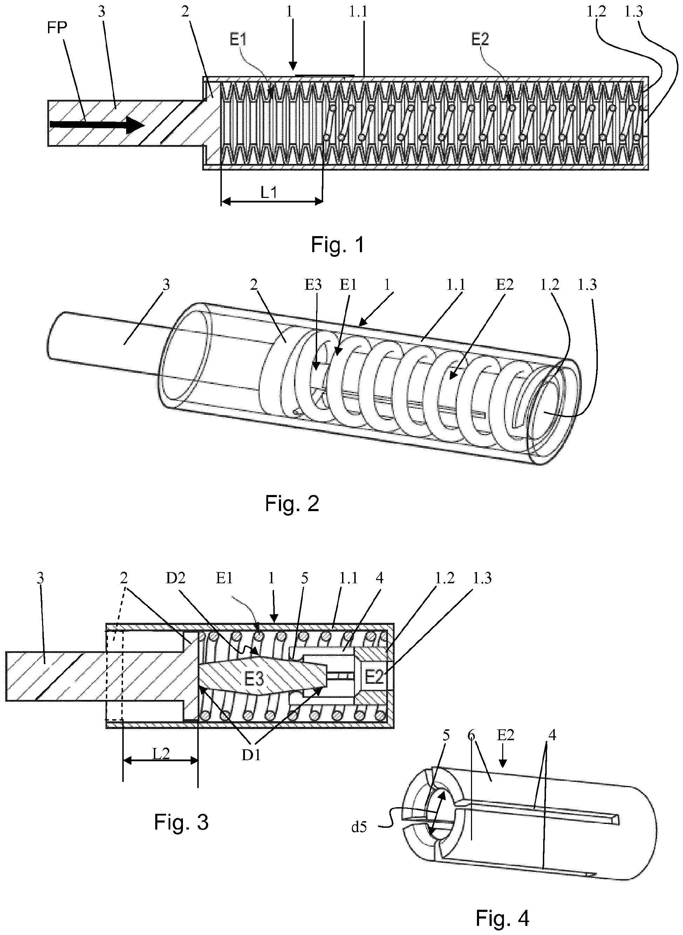

In Figur 1 ist eine mögliche erste konstruktive Variante eines Systems zur Pedalkraftsimulation (Pedalkraftsimulator) dargestellt. Daraus ist ersichtlich, dass in einem Gehäuse 1 ein Kolben 2 mittels einer Druckstange 3 axial beweglich angeordnet ist. Die Druckstange 3 steht mit einem nicht dargestellten Pedalhebel eines ebenfalls nicht gezeigten Pedals in Verbindung. Das Gehäuse 1 weist eine zylinderförmige Wand 1.1 und einen Boden 1.2 auf, wobei in den Boden 1.2 eine Entlüftungsbohrung 1.3 eingebracht ist. Zwischen dem Kolben 2 und dem Boden 1.2 des Gehäuses 1 stützt sich eine Rückstellfeder E1 ab, deren Außendurchmesser innen am Gehäuse 1 zentriert wird und die einen nicht bezeichneten Innendurchmesser aufweist. In Ausgangsstellung des Kolbens 2, d.h. wenn das Pedal nicht betätigt wird, hält die Rückstellfeder E1 den Kolben 2 in seiner in Figur 1 dargestellten Ausgangsposition. Innerhalb des Innendurchmessers der Rückstellfeder E1 ist ein zusätzliches erstes Federelement E2 angeordnet, welches sich ebenfalls am Boden 1.2 des Gehäuses 1 abstützt. Es ist jedoch das in Richtung zum Kolben 2 weisende Ende des zusätzlichen ersten Federelementes E2 in Ausgangsposition von der darauf zuweisenden Stirnseite des Klobens 2 um eine Länge L1 beabstandet.

Bei Betätigung des nicht dargestellten Pedals (beispielsweise Kupplungspedal eines Fahrzeuges) wird über die Pedalstange 3 der Kolben 2 mit einer Pedalkraft betätigt, welcher die Rückstellkraft der Rückstellfeder E1 entgegenwirkt. Hat der Kolben einen Betätigungsweg der Länge L1 zurückgelegt, stellt bei einer weiteren Pedalbetätigung zusätzlich das erste elastische Federelement E2 eine weitere Rückstellkraft zum Kolben 2 bzw. zum Pedal zur Verfügung, wodurch der Pedalkraftsimulator über den Betätigungsweg eine nichtlineare Kennlinie besitzt. Ab diesem Betätigungspunkt, in dem auch das erste elastische Federelement E2 wirkt, kann eine flacher werdende, stagnierende oder steigende Kennlinie erzeug werden.

Gemäß nicht dargestellter Ausführungsbeispiele können die Rückstellfeder E1 und das zusätzliche erste elastische Federelement E2 auch auf der Außenseite des Gehäuses 1 angeordnet sein.

Die Konstruktion einer weiteren Variante eines erfindungsgemäßen Pedalkraftsimulators ist in Figur 2 dreidimensional und in Figur 3 im Längsschnitt schematisch dargestellt. Auch bei dieser Variante ist in einem Gehäuse 1 ein mittels einer Pedalstange 3 betätigbarer Kolben 2 angeordnet, der gegen eine im Gehäuse 1 zwischen dem Boden 1.2 und der Stirnfläche des Kolbens sitzende Rückstellfeder E1 bei Betätigung des hier nicht dargestellten Pedals wirkt. Das Pedal wurde gemäß Figur 2 und 3 bereits betätigt, so dass der Kolben 2 aus der in Figur 3 gestrichelt dargestellten Ausgangsposition um eine Länge L2 (Betätigungsweg) in Richtung zum Boden 1.2 des Gehäuses 2 bewegt wurde. Bis zu dieser Position wirkt lediglich die Rückstellfeder E1 mit einer Rückstellkraft auf den Kolben 2.

Bei dieser Variante ist ebenfalls ein weiteres erstes elastisches Federelement E2 vorgesehen, welches sich am Boden 1.2 des Gehäuses 1 abstützt und im Wesentlichen hohlzylindrisch ausgebildet ist. Es weist Längsschlitze 4 und in Richtung zum Kolben 2 einen radial nach innen weisenden Absatz mit einer Ausnehmung 5 mit einem Innendurchmesser d5 (siehe Figur 4) auf, aus deren Richtung die Längsschlitze 4 eingebracht sind. Zwischen dem ersten Element E2 und dem Kolben 2 sitzt ein drittes Element E3, welches im Längsschnitt in der Art eines Rhombus ausgebildet ist und somit eine Durchmessererweiterung von einem an den Enden geringen Durchmesser D1 als der Durchmesser d5 der Ausnehmung 5 des ersten Federelementes E2 auf einen in etwa mittigen größeren Durchmesser D2 als der Durchmesser d5 der Ausnehmung aufweist.

Das zweite Element D3 ist dadurch bei Betätigung des Kolbens 2 in das erste Element E2 einschiebbar und deformiert dabei ab dem in Figur 3 zurückgelegten Betätigungsweg der Länge L2 das erste Element E2 durch das Übermaß zwischen E2 und E3.

Das weitere erste Element / Federelement E2 besitzt die Eigenschaft, durch federnde Bereiche 6, die durch die Längsschlitze 4 gebildet werden, in radialer, axialer oder tangentialer Richtung eine je nach Betätigung des Kolbens 2 variable zusätzliche Gegenkraft (Rückstellkraft) zu erzeugen. Das zweite Element E3 verformt bis zu einer gewissen Pedalstellung das erste Federelement E2. Dadurch wird die zusätzliche Kraft entgegen der Pedalkraftrichtung erzeugt. Durchschreitet der größte Durchmesser D2 des zweiten Elements E3 den Kontaktbereich des federnden ersten Elements/Federelements E2, d.h. dessen Innendurchmesser d5, so dass kein radiales Übermaß mehr zwischen ersten und zweiten Element E2, E3 vorhanden ist, wird die Gegenkraft in eine gleichgerichtete Kraft zur Pedalkraft umgewandelt und unterstützt die Betätigung. Die Kraftkennlinie stagniert oder sinkt dadurch. Die Pedalkraft kann durch diese Eigenschaft variabel eingestellt werden. Durch verschiedene Kombinationen des ersten und zweiten Elements E2 und E3 können auch verschiedene Betätigungseigenschaften, je nach Wunsch des Fahrers erzeugt werden.

Das zweite Element E3 kann aus einem nicht elastisch verformbaren Material bestehen oder ebenfalls elastisch verformbar sein, wobei der Elastizitätsmodul des zweiten Elements und des dritten Elements gleich oder unterschiedlich sein können. Das zweite Element E2 ist mit dem Kolben 3 verbunden, um mit diesem den erforderlichen Rückhub vollführen zu können.

Auch bei dieser Variante können gemäß nicht dargestellter Ausführungsbeispiele die Rückstellfeder E1 und/oder das zusätzliche erste elastische Federelement E2 und/oder das zweite Element E3 auch auf der Außenseite des Gehäuses 1 angeordnet sein.

### Bezugzeichenliste

- 1: Gehäuse
- 1.1: Wand
- 1.2: Boden
- 1.3: Entlüftungsbohrung
- 2: Kolben
- 3: Druckstange
- 4: Längsschlitze
- 5: Ausnehmung
- 6: federnde Bereiche

- d5: Innendurchmesser
- D1: Durchmesser an den Enden des zweiten Elements
- D2: größter Durchmesser des zweiten Elements
- E1: Rückstellfeder
- E2: erstes federndes Element/Federelement
- E3: zweites Element
- L1: Länge
- L2: Betätigungsweg

## Patentansprüche

1. System zur Pedalkraftsimulation für ein Kupplungsbetätigungssystem wobei das Pedal mit einer Pedalkraft betätigbar ist und mit einem, in einem Gehäuse (1) entgegen einer Rückstellkraft einer Rückstellfeder (E1) axial verschiebbaren Kolben (2) wirkverbunden ist, und die Stellung des Pedals über einen Sensor erfassbar und an die die Kupplung betätigende Aktorik weiterleitbar ist, wobei der Kolben (2) mit wenigstens einem ersten federnden Element (E2) wirkverbunden ist, welches mit ansteigendem und abfallenden Kraftverlauf eine Hysterese bereitstellt, **dadurch gekennzeichnet, dass** das erste federnde Element (E2) mit wenigstens einem zweiten Element (E3) kombiniert ist, welches zwischen dem Kolben (2) und dem ersten federnden Element (E2) angeordnet ist derart, dass das zweite Element (E3) bis zu einer ersten Position des Kolbens (2) das federnde erste Element (E2) elastisch verformt und die Rückstellkraft erzeugt wird und dass nach Überschreiten der ersten Position die Rückstellkraft in eine gleichgerichtete Kraft zur Pedalkraft umgewandelt wird.

2. System nach Anspruch 1, **dadurch gekennzeichnet, dass** sowohl die Rückstellfeder (E1) als auch das erste federnde Element (E2) zwischen Kolben (2) und Gehäuse (1) angeordnet ist und das durch die Betätigung des Pedals und somit des Kolbens (2) durch das erste federnde Element (E2) eine auf den Kolben (2) wirkende Rückstellkraft erzeugbar ist.

3. System nach Anspruch 1 oder 2, **dadurch gekennzeichnet, dass** das erste federnde Element (E2) eine nicht lineare Kennlinie über einen Betätigungsweg des Kolbens (2) aufweist.

4. System nach einem der Ansprüche 1 bis 3, **dadurch gekennzeichnet, dass** die Rückstellfeder (E1) und/oder das erste federnde Element (E2) und/oder das zweite Element (E3) innerhalb oder außerhalb des Gehäuses (1) angeordnet ist/sind.

5. System nach einem der Ansprüche 1 bis 4, **dadurch gekennzeichnet, dass** die Rückstellfeder (E1) und das erste federnde Element (E2) innerhalb des Gehäuses (1) angeordnet sind und sich am Boden des Gehäuses (1) abstützen und dass das erste federnde Element (E2) die Rückstellfeder (E1) umringt oder von der Rückstellfeder (E1) umringt ist.

6. System nach einem der Ansprüche 1 bis 5, **dadurch gekennzeichnet, dass** das erste federnde Element (E2) federnde Bereiche in radialer und/oder axialer und/oder tangentialer Richtung aufweist.

7. System nach einem der Ansprüche 1 bis 6, **dadurch gekennzeichnet, dass** das erste federnde Element (E2) und das zweite Element (E3) ein sich über eine erste Länge erstreckendes radiales Übermaß zueinander aufweisen, so dass über einen Betätigungsweg bei einer axialen Relativbewegung des zweiten Elements (E3) zum ersten Element (E2) eine Reibkraft zwischen dem ersten federnden Element (E2) und dem zweiten Element (E3) zu verzeichnen ist.

8. System nach einem der Ansprüche 1 bis 7, **dadurch gekennzeichnet, dass** das erste federnde Element (E2) hülsenartig ausgebildet ist und mit einem ersten Ende am Boden des Gehäuses (1) anliegt und an dem zweiten in Richtung zum Kolben (2) weisenden Ende einen radial nach innen weisenden Absatz mit einer Ausnehmung (5) mit einem Innendurchmesser (d5) aufweist und dass das zweite Element (E3) eine Durchmessererweiterung besitzt, deren Außendurchmesser (D2) größer ist als der Innendurchmesser (d5) der Ausnehmung (5) und dass das zweite Element (E3) bei Betätigung des Kolbens (2) in das erste Element (E2) einschiebbar ist.

## Claims

1. System for pedal force simulation for a clutch actuating system, it being possible for the pedal to be actuated with a pedal force, and the said pedal being operatively connected to a piston (2) which can be displaced axially in a housing (1) counter to a restoring force of a restoring spring (E1), and it being possible for the position of the pedal to be detected via a sensor and to be forwarded to the actuator system which actuates the clutch, the piston (2) being operatively connected to at least one first resilient element (E2) which provides a hysteresis with a rising and falling force progression, **characterized in that** the first resilient element (E2) is combined with at least one second element (E3) which is arranged between the piston (2) and the first resilient element (E2) in such a way that, up to a first position of the piston (2), the second element (E3) elastically deforms the resilient first element (E2) and the restoring force is generated, and that, after the first position is exceeded, the restoring force is converted into an identically directed force with respect to the pedal force.

2. System according to Claim 1, **characterized in that** both the restoring spring (E1) and the first resilient element (E2) are arranged between the piston (2) and the housing (1), and **in that** a restoring force which acts on the piston (2) can be generated as a result of the actuation of the pedal and therefore of the piston (2) by way of the first resilient element (E2).

3. System according to Claim 1 or 2, **characterized in that** the first resilient element (E2) has a non-linear characteristic over an actuating travel of the piston (2) .

4. System according to one of Claims 1 to 3, **characterized in that** the restoring spring (E1) and/or the first resilient element (E2) and/or the second element (E3) are/is arranged inside or outside the housing (1).

5. System according to one of Claims 1 to 4, **characterized in that** the restoring spring (E1) and the first resilient element (E2) are arranged inside the housing (1) and are supported on the bottom of the housing (1), and **in that** the first resilient element (E2) surrounds the restoring spring (E1) or is surrounded by the restoring spring (E1).

6. System according to one of Claims 1 to 5, **characterized in that** the first resilient element (E2) has resilient regions in the radial and/or axial and/or tangential direction.

7. System according to one of Claims 1 to 6, **characterized in that** the first resilient element (E2) and the second element (E3) have a radial oversize with respect to one another which extends over a first length, with the result that a frictional force between the first resilient element (E2) and the second element (E3) is to be recorded over an actuating travel in the case of an axial relative movement of the second element (E3) with respect to the first element (E2).

8. System according to one of Claims 1 to 7, **characterized in that** the first resilient element (E2) is of sleeve-like configuration, bears with a first end against the bottom of the housing (1), and, at the second end which points in the direction of the piston (2), has a radially inwardly pointing shoulder with a recess (5) with an internal diameter (d5), and **in that** the second element (E3) has a widened diameter portion, the external diameter (D2) of which is greater than the internal diameter (d5) of the recess (5), and **in that** the second element (E3) can be pushed into the first element (E2) in the case of an actuation of the piston (2).

## Revendications

1. Système de simulation de la force de pédale pour un système d'actionnement d'embrayage, la pédale pouvant être actionnée avec une force de pédale et étant en liaison fonctionnelle avec un piston (2) déplaçable axialement dans un boîtier (1) à l'encontre d'une force de rappel d'un ressort de rappel (E1), et la position de la pédale pouvant être détectée par le biais d'un capteur et pouvant être transmise au système d'actionneur actionnant l'embrayage, le piston (2) étant en liaison fonctionnelle avec au moins un premier élément à ressort (E2) qui fournit une hystérésis avec une allure de force croissante et décroissante, **caractérisé en ce que** le premier élément à ressort (E2) est combiné avec au moins un deuxième élément (E3) qui est disposé entre le piston (2) et le premier élément à ressort (E2) de telle sorte que le deuxième élément (E3) déforme élastiquement le premier élément à ressort (E2) jusqu'à une première position du piston (2) et génère la force de rappel et qu'après le dépassement de la première position, la force de rappel soit convertie en une force orientée dans le même sens que la force de pédale.

2. Système selon la revendication 1, **caractérisé en ce qu'**à la fois le ressort de rappel (E1) et le premier élément à ressort (E2) sont disposés entre le piston (2) et le boîtier (1) et **en ce que** par l'actionnement de la pédale et par conséquent du piston (2) par le premier élément à ressort (E2), une force de rappel agissant sur le piston (2) peut être générée.

3. Système selon la revendication 1 ou 2, **caractérisé en ce que** le premier élément à ressort (E2) présente une caractéristique non linéaire sur une trajectoire d'actionnement du piston (2).

4. Système selon l'une quelconque des revendications 1 à 3, **caractérisé en ce que** le ressort de rappel (E1) et/ou le premier élément à ressort (E2) et/ou le deuxième élément (E3) est/sont disposés à l'intérieur ou à l'extérieur du boîtier (1).

5. Système selon l'une quelconque des revendications 1 à 4, **caractérisé en ce que** le ressort de rappel (E1) et le premier élément à ressort (E2) sont disposés à l'intérieur du boîtier (1) et s'appuient sur le fond du boîtier (1) et **en ce que** le premier élément à ressort (E2) entoure le ressort de rappel (E1) ou est entouré par le ressort de rappel (E1).

6. Système selon l'une quelconque des revendications 1 à 5, **caractérisé en ce que** le premier élément à ressort (E2) présente des régions élastiques dans la direction radiale et/ou axiale et/ou tangentielle.

7. Système selon l'une quelconque des revendications 1 à 6, **caractérisé en ce que** le premier élément à ressort (E2) et le deuxième élément (E3) présentent l'un par rapport à l'autre un surdimensionnement radial s'étendant sur une première longueur de telle sorte que dans le cas d'un déplacement relatif axial du deuxième élément (E3) par rapport au premier élément (E2), une force de frottement entre le premier élément à ressort (E2) et le deuxième élément (E3) puisse être enregistrée sur une trajectoire d'actionnement.

8. Système selon l'une quelconque des revendications 1 à 7, **caractérisé en ce que** le premier élément à ressort (E2) est réalisé en forme de douille et s'applique avec une première extrémité contre le fond du boîtier (1) et présente, au niveau de la deuxième extrémité tournée dans la direction du piston (2), un épaulement tourné radialement vers l'intérieur avec un évidement (5) ayant un diamètre intérieur (d5) et **en ce que** le deuxième élément (E3) possède un élargissement de diamètre dont le diamètre extérieur (D2) est supérieur au diamètre intérieur (d5) de l'évidement (5) et **en ce que** le deuxième élément (E3) peut être enfoncé dans le premier élément (E2) lors de l'actionnement du piston (2).
